(19) Europäisches Patentamt

European Patent Office

Office européen des brevets

(11) Numéro de publication: **0 351 324**
**A1**

(12) **DEMANDE DE BREVET EUROPEEN**

(21) Numéro de dépôt: 89420233.2

(22) Date de dépôt: 29.06.89

(51) Int. Cl.⁵: **B 62 M 9/12**

(30) Priorité: 12.07.88 FR 8809758

(43) Date de publication de la demande:
17.01.90 Bulletin 90/03

(84) Etats contractants désignés:
AT BE CH DE ES GB GR IT LI LU NL SE

(71) Demandeur: SIMPLEX S.A.
Rue Jean Moulin B.P. No. 60 Z.I. Couchey
F-21160 Marsannay La Cote (FR)

(72) Inventeur: Juy, Henri
43 Rue Chabot Charny
F-21000 Dijon (FR)

(74) Mandataire: Dupuis, François
Cabinet Charras 3 Place de l'Hôtel-de-Ville BP 203
F-42005 St. Etienne Cédex 1 (FR)

(54) **Dérailleur arrière pour bicyclette ou véhicule similaire.**

(57) Le dérailleur arrière est remarquable en ce qu'il présente, au niveau de la partie fixe recevant le câble, un moyen (9) apte à déplacer à volonté le point d'appui et de renvoi (A) du câble pour modifier l'angle (α) que fait le câble, de manière à augmenter ou diminuer l'amplitude de déplacement transversal du parallélogramme pour une même amplitude de déplacement angulaire du levier.

FIG.1

## Description

### Dérailleur arrière pour bicyclette ou véhicule similaire.

L'invention se rattache au secteur technique des cycles et accessoires.

Plus particulièrement, mais non limitativement, l'invention concerne les dérailleurs arrière assujettis à des leviers ou manettes indexés. On sait que l'indexation correspond à un pas, de sorte qu'une course du levier en fonction du tambour d'enroulement sur ledit levier, correspond à une certaine longueur de câble déplacée. Dans ces conditions, la longueur de câble tirée étant toujours la même, il apparaît que le déplacement transversal du guide-chaîne est toujours le même. Cette conséquence pose certains problèmes.

En effet, il n'est pas possible d'utiliser le même dérailleur si l'on veut par exemple changer de roue libre en passant d'une roue libre à 6 vitesses à une roue libre de 7 ou 8 vitesses compactes.

Le problème posé est donc de pouvoir, pour un même déplacement angulaire du levier, c'est-à-dire pour une même longueur de câble tirée, obtenir une course de dérailleur différente.

Plus particulièrement, le dérailleur est du type de ceux comprenant, d'une manière connue, un support supérieur fixé à la bicyclette et un support inférieur portant un guide-chaîne, lesdits supports étant reliés par un système de biellettes constituant un parallélogramme déformable assujetti à un câble de manoeuvre solidaire d'un levier, ledit câble coopérant avec une partie fixe du dérailleur, notamment le support supérieur et un point de fixation établi sur une partie mobile.

Pour résoudre le problème posé selon l'invention, le dérailleur présente au niveau de la partie fixe recevant le câble, un moyen apte à déplacer à volonté le point d'appui et de renvoi du câble pour modifier l'angle ($\alpha$) que fait le câble, de manière à augmenter ou diminuer l'amplitude de déplacement transversal du parallélogramme pour une même amplitude de déplacement angulaire du levier.

Avantageusement, le problème posé est résolu par les caractéristiques suivantes :

Le moyen apte à déplacer à volonté le point d'appui et de renvoi est un organe monté avec capacité de déplacement angulaire pour occuper essentiellement deux positions.

L'organe est agencé pour permettre, en fonction de la position angulaire qu'il occupe, deux cheminements différents du câble, correspondant à un déplacement du point d'appui, dans le même alignement axial que la partie fixe du dérailleur recevant le câble.

L'organe présente un trou débouchant dans lequel peut être engagé le câble et, à son extrémité libre, une portée d'appui et de guidage apte à coopérer, selon le cas, avec ledit câble.

L'invention est exposée ci-après plus en détail à l'aide des dessins dans lesquels :

La figure 1 est une vue de face, à caractère purement schématique, montrant le dérailleur dans une position du câble de traction correspondant à une certaine amplitude de déplacement transversal.

La figure 2 est une vue semblable correspondant à la figure 1 montrant une autre position.

Les figures 3 et 4 sont des vues en perspectives d'un exemple de réalisation du dérailleur, selon deux positions différentes correspondant chacune à deux amplitudes de déplacement.

D'une manière parfaitement connue, le dérailleur comprend un support supérieur (1) fixé à la bicyclette et un support inférieur (2) portant un guide-chaîne (3). Les supports (1) et (2) sont reliés par un système de biellettes (4 - 5) constituant un parallélogramme déformable, assujetti à un câble de traction (C) solidaire d'un levier ou manette.

Le câble (C) est engagé dans une gaine (6) coopérant en bout avec un arrêt de gaine (7) centré et en appui dans un tunnel de guidage (1a) qui présente le support supérieur (1). L'extrémité libre du câble (C) coopère avec un attache-câble (8) relié à la biellette avant (5) ou au support inférieur (2). La sortie du tunnel de guidage (1a) et l'attache-câble (8) sont situés très sensiblement selon l'une des diagonales du parallélogramme.

Dans ces conditions, un effort de traction exercé sur le câble (C) par l'intermédiaire du levier, a pour effet de déplacer transversalement le support inférieur (2) assujetti au guide-chaîne (3), en direction des pignons de plus grand diamètre.

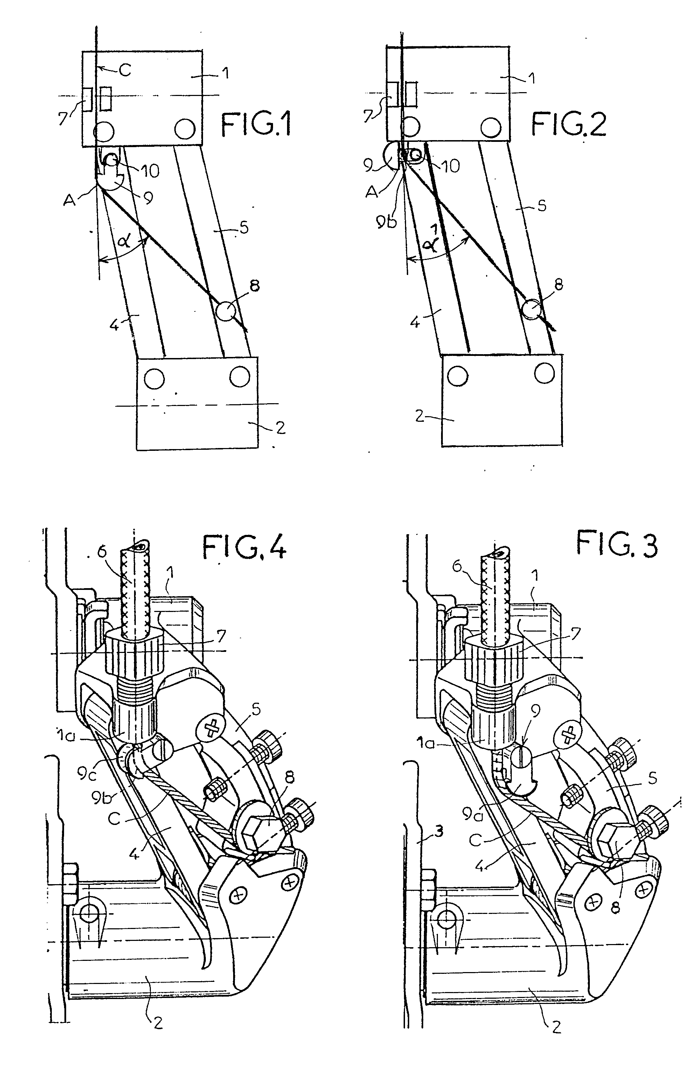

Selon l'invention, une partie fixe du dérailleur, notamment le support supérieur, présente un moyen apte à déplacer à volonté le point d'appui et de renvoi (A) du câble (C), situé sur la diagonale définie par le cheminement dudit câble. Le déplacement du point d'appui (A) a pour effet de modifier l'angle ($\alpha$) que fait le câble (C), ce qui a pour effet d'augmenter ou de diminuer l'amplitude de déplacement transversal du parallélogramme pour une même amplitude de déplacement angulaire du levier (figures 1 et 2).

Le moyen de déplacement du point (A) est constitué par un organe (9) monté avec capacité de déplacement angulaire pour occuper essentiellement deux positions au niveau de la sortie du tunnel. Plus particulièrement, l'organe (9) est agencé pour permettre en fonction de la position angulaire qu'il occupe, deux cheminements différents du câble correspondant à deux angulations différentes ($\alpha$) et ($\alpha$1) considérées à partir de la direction du câble donnée par le tunnel de sortie (1a).

L'organe (9) est articulé par un axe (10) et présente une partie (9a) déportée latéralement par rapport audit axe. Cette partie (9a) présente, d'une part, un trou débouchant (9b) et, d'autre part, à son extrémité libre, une portée d'appui et de guidage (9c).

Dans ces conditions, lorsque l'organe (9) est orienté angulairement, dans un plan sensiblement horizontal par exemple, le câble (C) peut être engagé dans le trou débouchant. Dans cette position du point d'appui (A), l'effort de traction s'opère selon un angle ($\alpha$) correspondant à un

certain déplacement transversal du dérailleur (figure 4).

A l'inverse, lorsque l'organe (9) est orienté angulairement, dans un plan sensiblement vertical par exemple, le câble (C) peut coopérer avec la portée d'appui et de guidage (9c). Cette position du point d'appui (A) engendre un effort de traction selon un angle ($\alpha$1) correspondant à un déplacement du dérailleur d'une amplitude différente (figure 3).

Il apparaît que plus le point (A) est situé haut sur la diagonale, plus l'amplitude de déplacement transversal est importante.

D'une manière importante, il résulte de ces dispositions que le point d'appui (A) pour l'effort de traction, quelle que soit la position choisie de l'organe (9), est positionné en alignement et dans le prolongement de la partie fixe (1a) du dérailleur recevant le câble.

Le trou débouchant (9b) de l'organe (9) peut être rectiligne ou curviligne. La portée d'appui (9c) est curviligne.

Bien évidemment, les dispositions décrites s'appliquent à tous types de dérailleurs arrière assujettis à un levier ou manette de manoeuvre avec ou non un système d'indexation.

Les avantages ressortent bien de la description, en particulier on souligne et on rappelle que pour un même déplacement angulaire de la manette, c'est-à-dire pour une même longueur de câble tirée, on obtient une amplitude de déplacement transversal différente en fonction de la position choisie de l'organe de renvoi. Il est ainsi possible, pour un même dérailleur, de passer d'une roue libre à six vitesses à une roue libre de sept ou huit vitesses.

**Revendications**

-1- Dérailleur arrière pour bicyclettes et véhicules similaires du type de ceux comprenant un support supérieur (1) fixé à la bicyclette et un support inférieur (2) portant un guide-chaîne (3), lesdits supports (1) et (2) étant reliés par un système de biellettes (4 - 5) constituant un parallélogramme déformable assujetti à un câble de manoeuvre (C) solidaire d'un levier, ledit câble coopérant avec une partie fixe (1a) du dérailleur, notamment le support supérieur et un point de fixation (8) établi sur une partie mobile, caractérisé en ce qu'il présente, au niveau de la partie fixe recevant le câble, un moyen (9) apte à déplacer à volonté le point d'appui et de renvoi (A) du câble pour modifier l'angle ($\alpha$) que fait le câble, de manière à augmenter ou diminuer l'amplitude de déplacement transversal du parallélogramme pour une même amplitude de déplacement angulaire de levier.

-2- Dérailleur selon la revendication 1, caractérisé en ce que le moyen apte à déplacer à volonté le point d'appui et de renvoi est un organe (9) monté avec capacité de déplacement angulaire pour occuper essentiellement deux positions, à choisir en fonction de la roue libre utilisée.

-3- Dérailleur selon la revendication 2, caractérisé en ce que l'organe (9) est agencé pour permettre, en fonction de la position angulaire qu'il occupe, deux cheminements différents du câble, correspondant à un déplacement du point d'appui, dans le même alignement axial que la partie fixe du dérailleur recevant le câble.

-4- Dérailleur selon la revendication 3, caractérisé en ce que l'organe présente un trou débouchant (9b) dans lequel peut être engagé le câble et, à son extrémité libre, une portée d'appui et de guidage (9c) apte à coopérer, selon le cas, avec ledit câble.

-5- Dérailleur selon la revendication 4, caractérisé en ce que la portée d'appui et de guidage est curviligne.

-6- Dérailleur selon la revendication 4, caractérisé en ce que le trou débouchant est curviligne.

EP 0 351 324 A1

FIG.1

FIG.2

FIG.4

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | FR-A-2 345 341 (L.C.H. JUY)<br>* Page 4, ligne 14 - page 5, ligne 26; figures * | 1,2 | B 62 M 9/12 |
| A | ----- | 3 | |

DOMAINES TECHNIQUES
RECHERCHES (Int. Cl.4)

B 62 M

Le présent rapport a été établi pour toutes les revendications

| Lieu de la recherche | Date d'achèvement de la recherche | Examinateur |
|---|---|---|
| LA HAYE | 20-10-1989 | FRANKS B.G. |